# FASCICULE DE BREVET EUROPEEN

(11) **EP 1 978 512 B1**
(45) Date de publication et mention de la délivrance du brevet: **28.07.2010**
(21) Numéro de dépôt: 08103293.0
(22) Date de dépôt: 01.04.2008
(51) Int. Cl.: G11B 7/0055, G11B 7/24, G11B 20/00, G11B 7/257

(54) **Procédé de détérioration intentionelle du contenu d'un support d'enregistrement optique**
Verfahren zur absichtlichen Verschlechterung des Inhalts eines optischen Datenträgers
Method for intentionally degrading the content of an optical recording medium

(30) Priorité: 06.04.2007 FR 0702562
(43) Date de publication de la demande: 08.10.2008
(73) Titulaire: Commissariat à l'Énergie Atomique et aux Énergies Alternatives, 75015 Paris (FR)
(72) Inventeur: Hyot, Bérangère, 38320, EYBENS (FR); Andre, Bernard, 38950, QUAIX EN CHARTREUSE (FR); Desre, Pierre, 38240, MEYLAN (FR); Poupinet, Ludovic, 38360, SASSENAGE (FR); Chaton, Patrick, 38570, THEYS (FR)
(74) Mandataire: Guérin, Michel

(56) Documents cités:
- JP-A- 7 029 206
- US-A1- 2005 254 408
- MASAKI YAMAMOTO ET AL.: "Super-Resolution Optical Disc with High Readout Stability Using a Zinc Oxide Thin Film" JAPANESE JOURNAL OF APPLIED PHYSICS, vol. 43, no. 7B, 2004, pages 4959-4963, XP007903495

## Description

L'invention concerne le domaine de l'enregistrement optique d'informations.

Dans ce domaine, il peut être intéressant de disposer de medias d'enregistrement qui soient neutralisables de manière irréversible, par exemple pour limiter le nombre d'accès en lecture dans les cas où on veut éviter une utilisation non autorisée des données enregistrées. En particulier, dans les mémoires optiques sur disque (CDROM, CD audio, DVD etc.) un effacement irréversible des données ou d'une partie des données peut servir de protection contre la copie non autorisée des informations contenues dans la mémoire.

Les données optiques sont en principe stockées sur le support sous forme de marques physiques qui sont des singularités de dimensions contrôlées qui présentent un contraste optique permettant la lecture par un système de détection à faisceau laser.

Les marques physiques peuvent être des empreintes formées par moulage d'un substrat en polycarbonate (DVDROM par exemple) ; elles sont alors enregistrées une fois pour toutes ; elles peuvent être également constituées par des zones enregistrées dans des couches sensibles par l'action d'un faisceau lumineux d'écriture ; l'enregistrement peut alors être réversible (effacement possible, voire ré-enregistrement) ou irréversible (pas d'effacement possible ni de réécriture).

Typiquement, dans le cas d'un enregistrement optique irréversible, l'enregistrement se fait par irradiation, au moyen d'une diode laser, d'une couche colorée qui est dégradée localement si la puissance du laser d'écriture dépasse un seuil. Cette dégradation locale définit des marques dont la longueur est définie par le temps pendant lequel le laser agit sur le disque en rotation, compte-tenu de la vitesse de rotation de celui-ci.

Pour les disques réinscriptibles l'écriture se fait le plus souvent en chauffant un matériau dit "à changement de phase" grâce à une diode laser d'écriture. Le matériau est par exemple au départ dans une phase cristalline ; il passe localement dans un état amorphe là où le laser d'écriture agit. Le contraste optique (en réflectivité par exemple) entre les zones amorphes et les zones restées cristallines est suffisant pour permettre la lecture d'informations ainsi enregistrées. L'effacement se fait en insolant à nouveau ces zones par la diode laser, à une puissance supérieure à la puissance du laser de lecture mais inférieure à la puissance du laser d'écriture d'informations. Les zones devenues amorphes se recristallisent, celles qui étaient cristallines restent cristallines, et le disque est prêt pour une nouvelle opération d'écriture.

Lorsqu'on cherche à accroître la densité d'informations enregistrées sur un disque optique, on est en général limité par les performances du dispositif de lecture des informations. Le principe de base est que l'on ne peut que très difficilement lire des informations physiques inscrites dans le disque si leur dimension est inférieure à la limite de résolution du système optique qui servira à lire ces informations. Typiquement, avec une lecture par un laser rouge de longueur d'onde 650nm et une ouverture numérique de 0,6, on ne peut normalement pas espérer lire correctement des informations de résolution inférieure à 0,4 micromètre, à la rigueur 0,3 micromètre.

Cependant, des méthodes dites de super-résolution ont été imaginées pour lire des informations dont la dimension physique est inférieure, voire même très inférieure, à la longueur d'onde. Ces méthodes se fondent sur les propriétés optiques non-linéaires de certains matériaux. Par propriétés non-linéaires, on entend le fait que certaines propriétés optiques du matériau changent en fonction de l'intensité de la lumière qu'ils reçoivent. Le laser de lecture lui-même va modifier localement les propriétés optiques du matériau par des effets thermiques, optiques, thermo-optiques et/ou optoélectroniques sur des dimensions plus petites que la dimension du spot laser de lecture ; du fait du changement de propriété, une information présente dans ce très petit volume devient détectable alors qu'elle n'aurait pas été détectable sans ce changement.

Le phénomène qu'on exploite est fondé principalement sur deux propriétés du laser de lecture qu'on va utiliser :
- d'une part le laser est focalisé très fortement de manière à présenter une section extrêmement petite (de l'ordre de la longueur d'onde) mais dont la distribution de puissance est gaussienne, très forte en son centre, très atténuée à la périphérie,
- et d'autre part, on choisit une puissance de laser de lecture telle que la densité de puissance sur une petite partie de la section, au centre du faisceau, modifie significativement une propriété optique de la couche, alors que la densité de puissance en dehors de cette petite portion de section ne modifie pas significativement cette propriété optique ; la propriété optique est modifiée dans un sens tendant à permettre la lecture d'une information qui ne serait pas lisible sans cette modification.

Tout se passe alors comme si on avait utilisé un faisceau focalisé sur un diamètre beaucoup plus petit que ce que permet sa longueur d'onde.

Dans une précédente demande de brevet, déposée sous le numéro FR 0700938 le 9 février 2007, on a proposé une structure de stockage optique fonctionnant en super-résolution. Cette structure comprend un substrat (de préférence en polycarbonate) pourvu de marques physiques dont la configuration géométrique définit l'information enregistrée, une superposition de trois couches au-dessus des marques du substrat, et une couche de protection transparente au-dessus de cette superposition, la superposition comprenant une couche d'antimoniure d'indium ou de gallium insérée entre deux couches diélectriques d'un composé de sulfure de zinc et d'oxyde de silicium (ZnS-SiO₂).

Cette structure est favorable parce qu'elle nécessite une puissance laser de lecture relativement faible pour lire les informations en super-résolution avec un rapport signal/bruit satisfaisant. Or la question de la puissance de lecture est critique car, d'un côté, une puissance suffisamment élevée est nécessaire pour obtenir un effet de super-résolution par changement localisé de propriétés optiques, mais d'un autre côté une puissance trop élevée tend à détruire progressivement l'information enregistrée, limitant le nombre de cycles de lecture possible alors qu'on souhaite un nombre de cycles de lecture aussi élevé que possible.

En faisant des essais sur ces structures à base de InSb ou GaSb entre deux couches de ZnS-SiO₂, on a constaté de manière surprenante que l'on pouvait à la fois
- lire correctement, sans les dégrader, des informations inscrites en super-résolution, en utilisant un laser de lecture d'une première puissance P1,
- et dégrader de manière irréversible des informations inscrites en super-résolution en les lisant avec une puissance P2 inférieure à P1.

Cette constatation a été faite à partir de mesures répétées sur des échantillons comportant des marques régulièrement réparties, enregistrées en super-résolution.

Bien que ce phénomène n'ait pas jusqu'à ce jour pu être suffisamment expliqué scientifiquement, la répétition des constatations a aboutit à la conclusion qu'on pouvait utiliser industriellement ce phénomène pour neutraliser à volonté et de manière irréversible le contenu utile d'un disque optique enregistré en super-résolution. La neutralisation consiste en une dégradation de certaines zones (déterminées ou aléatoirement distribuées), rendant inutilisable le disque.

Par conséquent, on propose selon l'invention un procédé de dégradation intentionnelle d'informations inscrites en super-résolution dans une structure de stockage optique d'informations à haute résolution, la structure comprenant un substrat pourvu de marques physiques dont la configuration géométrique définit l'information enregistrée, une superposition de trois couches au-dessus des marques du substrat, et une couche de protection transparente au-dessus de cette superposition, la superposition comprenant une couche d'antimoniure d'indium ou de gallium insérée entre deux couches diélectriques d'un composé de sulfure de zinc et d'oxyde de silicium (ZnS-SiO₂) le procédé comprenant une opération de dégradation consistant à faire défiler sur les marques physiques un faisceau laser ayant une puissance inférieure d'environ 30% à la puissance d'un laser de lecture servant à lire les informations inscrites en super-résolution sur le disque.

A titre d'exemple d'utilisation, on peut prévoir que la structure de stockage ne doit pas être lue plus de N fois, et que le système de lecture déclenche après la N^{ième} lecture l'application d'une puissance de lecture plus faible qui effectue la dégradation de zones d'informations sensibles de la structure. Le nombre N peut d'ailleurs être contenu dans la structure elle-même, et lu par le système pour déclencher une modification de puissance du laser de lecture propre à effectuer la dégradation souhaitée. Si la structure de stockage est réinscriptible, on peut même y inscrire le nombre de lectures déjà effectuées pour gérer le moment souhaité pour la dégradation intentionnelle.

D'autres caractéristiques et avantages de l'invention apparaîtront à la lecture de la description détaillée qui suit et qui est faite en référence aux dessins annexés dans lesquels :
- la figure 1 représente la structure de stockage d'informations optiques utilisé pour mettre en oeuvre l'invention ;
- la figure 2 représente une vue au microscope à force atomique d'un substrat dans lequel ont été préformées des marques de dimension multiple de 80 nanomètres espacées de distances multiples de 80 nanomètres.

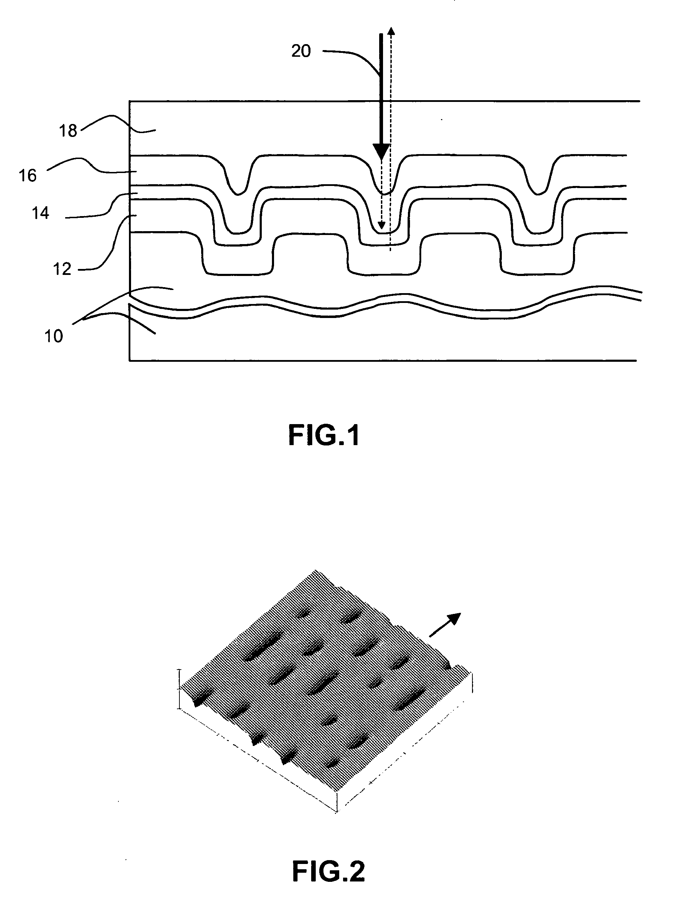

Sur la figure 1, on a représenté la structure générale du support de stockage optique d'informations utilisé pour la mise en oeuvre de l'invention.

Il comprend un substrat 10, qui est de préférence un matériau organique, et notamment du polycarbonate classiquement utilisé pour des disques optiques. Le substrat sera en pratique en forme de disque plan et les informations sont classiquement inscrites dans le disque sur des pistes sensiblement concentriques ; un faisceau laser de lecture, symbolisé par la flèche 20, placé devant le disque, verra les informations défiler devant lui lors de la rotation du disque.

Le substrat 10 comporte des marques physiques définissant l'information enregistrée, et dans cet exemple, les marques physiques sont constituées sous forme d'un relief imprimé à la surface supérieure du substrat. Le relief est par exemple constitué de creux dont la largeur est à peu près fixe pour toutes les informations inscrites, mais dont la longueur et l'espacement, dans le sens de défilement des informations, définissent le contenu de l'information inscrite. La lecture des informations se fait par analyse de la phase du faisceau laser réfléchi par la structure, phase qui varie au début et à la fin du passage de chaque marque physique. Les creux peuvent être préenregistrés par pressage du polycarbonate ou du substrat plastique par exemple à l'aide d'un moule en nickel qui a été réalisé à partir d'outils de gravure à faisceaux d'électrons de très haute résolution.

La largeur, la longueur, l'espacement des marques physiques peuvent être inférieures à la résolution optique théorique du système optique de lecture qui servira à les lire. Typiquement, s'il s'agit d'un laser bleu de longueur d'onde 400 nanomètres environ, utilisé avec une optique de focalisation dont l'ouverture numérique est de 0,85, la limite physique théorique de résolution est de l'ordre de 120 nanomètres en prenant des précautions. Ici, les marques peuvent être préenregistrées avec une résolution, en longueur ou en espacement, inférieure ou égale à 80 nanomètres comme on le verra.

Les marques sont recouvertes d'une triple couche constituée dans l'ordre par une couche diélectrique 12 de composé ZnS-SiO₂, une couche 14 d'antimoniure d'indium (InSb) ou antimoniure de gallium (GaSb), et une couche diélectrique 16 de composé ZnS-Si0₂. L'ensemble est recouvert par une couche de protection transparente 18.

La couche 14 en InSb ou GaSb est une couche à propriétés optiques non linéaires, et on a constaté que le pouvoir de réflexion de la structure tri-couche, couche GaSb ou InSb encadrée par les deux couches diélectriques ZnS-SiO₂, pouvait augmenter très significativement lorsqu'elle est illuminée par un faisceau laser d'une puissance de 1 à 2 milliwatts (correspondant en pratique à une densité de puissance d'environ 7 milliwatts par micromètre carré).

La figure 2 rappelle la manière dont peuvent être constituées les informations préenregistrées sur le substrat, avant dépôt de la superposition de trois couches 12, 14, 16 : trous borgnes de longueur et d'espacement variables. La flèche indique le sens de défilement du substrat sous le laser de lecture.

Les essais effectués ont montré que les épaisseurs optimales des couches de la structure selon l'invention sont les suivantes :
- couche inférieure de ZnS-SiO2 : de 20 à 100 nanomètres, de préférence environ 50 à 70 nanomètres ;
- couche GaSb ou InSb : de 10 à 50 nanomètres, de préférence environ 20 à 30 nanomètres ;
- couche supérieure de ZnS-SiO₂ : de 20 à 100 nanomètres, de préférence environ 50 à 60 nanomètres.

La composition atomique préférée pour le composé ZnS-SiO₂ est d'environ 80% de ZnS pour 20% de SiO₂. Elle peut aller d'un rapport 85/15 à un rapport 70/30.

La composition atomique de la couche InSb ou GaSb est de préférence d'environ 45% à 55% d'antimoine Sb ; la proportion d'indium ou de gallium est alors comprise entre 45% et le complément à 100% de la proportion d'antimoine. Un composé stoechiométrique In₅₀Sb₅₀ ou Ga₅₀Sb₅₀ convient bien, mais de petits écarts à la stoechiométrie sont acceptables.

Le dépôt des couches ne pose pas de problème particulier ; il peut être fait classiquement par pulvérisation cathodique à partir d'une cible comportant les matériaux considérés, aussi bien pour la couche active que pour les diélectriques, ou par dépôt en phase vapeur assisté par plasma.

L'invention est particulièrement applicable pour la lecture d'informations à partir d'un laser bleu, typiquement avec une longueur d'onde d'environ 400 nanomètres, les informations préenregistrées sur le disque optique pouvant alors avoir une résolution de 100 nanomètres ou moins, c'est-à-dire quatre à cinq fois moins que la longueur d'onde de lecture.

La lecture des informations se fera de préférence en utilisant une puissance de laser de lecture d'environ 1,5 à 2 milliwatts. La longueur d'onde du laser est de préférence de l'ordre de 400 nanomètres. L'optique de focalisation a une ouverture numérique d'environ 0,85.

La dégradation volontaire des informations se fera en utilisant un laser semblable au laser de lecture, ou le laser de lecture lui-même, avec une optique de focalisation semblable ou avec l'optique de lecture elle-même, mais avec une puissance réduite du laser. La puissance réduite sera d'environ 30% inférieure à la puissance de lecture. Si le laser servant à assurer la dégradation intentionnelle des informations est le laser de lecture lui-même, on le fera fonctionner avec un courant et/ou une tension d'alimentation plus faibles pendant l'opération de dégradation que pendant l'opération de lecture en super-résolution.

La dégradation peut être constatée notamment en faisant des mesures de fluctuations des longueurs des marques présentes dans le signal de sortie par rapport à la période d'horloge de référence (mesure de "jitter" en anglais) du signal de sortie. La période d'horloge de référence est par exemple la durée T correspondant à une distance de référence de 80nm balayée par le faisceau laser de lecture lors de la rotation du disque. Le degré de régularité des marques lues se mesure en rapport (en pourcentage) entre les périodes réellement détectées dans le signal lu et la période théorique de ce signal, et on peut considérer que l'information enregistrée est dégradée si la fluctuation de période mesurée dépasse 10% alors que les informations sont précisément périodiques sur le disque. En effet, si la fluctuation dépasse 10%, un échantillonnage du signal à la fréquence 1/T, pour détecter la présence ou l'absence des marques, a une probabilité non négligeable de donner un résultat faux.

La méthode pratique de mesure consiste à comptabiliser les durées des marques enregistrées successives, déterminées à partir du signal de sortie de la tête de lecture, et à en établir un histogramme (nombre de marques repérées ayant telle ou telle longueur), puis à déterminer l'écart-type des longueurs, cet écart-type représentant la fluctuation par rapport à l'horloge de référence. On peut faire le calcul éventuellement en tenant compte des fluctuations de vitesse de rotation du support d'enregistrement si sa vitesse de rotation n'est pas parfaitement régulière.

On a constaté que
- la lecture a de faibles puissances (inférieures à 1 mw) donnait une fluctuation faible par rapport à l'horloge de référence, inférieure à 10% (les informations en super-résolution ne pouvant cependant pas être visibles à une faible puissance) ;
- les informations lues à une puissance relativement élevée, pour laquelle l'effet de super-résolution s'applique, soit environ 1,5 à 2 milliwatts donnent une fluctuation faible, au-dessous de 10% ;
- les informations lues à une puissance moyenne (environ 1,2 à 1,5 milliwatts, soit environ 30% de moins que la puissance de lecture en super-résolution), donnent une fluctuation forte, pouvant atteindre près de 20% ;
- après une lecture à puissance moyenne, les informations en super-résolution ne peuvent plus être lues en rétablissant la puissance de lecture normale en super-résolution ; elles sont affectées d'une fluctuation forte, supérieure à 10%, et ceci a été observé de manière répétitive ; les informations sont irrémédiablement dégradées, la dégradation étant mesurée par une valeur de jitter ; l'observation au microscope à force atomique a confirmé le fait que les marques enregistrées sont détériorées.

L'observation a été répétée de multiples fois, sur des structures différentes les unes des autres et aussi bien lorsque la couche à changement de phase était de l'antimoniure d'indium que lorsqu'elle était de l'antimoniure de gallium.

Les essais ont été faits sur les structures suivantes, rassemblées dans le tableau ci-dessous dans lequel :
- la couche inférieure 12 de ZnS-SiO₂ déposée sur le substrat en polycarbonate 10 est désignée par couche C1 ;
- la couche à changement de phase 14 en InSb ou GaSb par couche C2 ;
- la couche supérieure 16 de ZnS-SiO₂ est désignée par couche C3;
- la puissance de laser de lecture normale en super-résolution est désignée par P1 ;
- la puissance à laquelle une dégradation est constatée, empêchant irréversiblement la lecture en super-résolution est désignée par P2.

| Couche C1 ZnS-SiO₂ : | Couche C2 InSb ou GaSb | Couche C3 ZnS-SiO₂ | Puissance P1 lecture | Puissance P2 dégradation |
|---|---|---|---|---|
| 75 nm | InSb 20 nm | 40 nm | 1,3 mw | 0,9 mw |
| 75 nm | InSb 20 nm | 50 nm | 1,5 mw | 1,0 mw |
| 75 nm | InSb 20 nm | 70 nm | 1,9 mw | 1,3 mw |
| 75 nm | InSb 20 nm | 80 nm | 2 mw | 1,4 mw |
| 75 nm | GaSb 20 nm | 50 nm | 2 mw | 1,5 mw |

Le procédé de dégradation irréversible selon l'invention est utile pour limiter le nombre d'accès à un média enregistré, ou limiter l'utilisation abusive ou frauduleuse des données enregistrées.

## Revendications

1. Procédé de dégradation intentionnelle d'informations inscrites en super-résolution dans une structure de stockage optique d'informations à haute résolution, la structure comprenant un substrat (10) pourvu de marques physiques dont la configuration géométrique définit l'information enregistrée, une superposition de trois couches (12, 14, 16) au-dessus des marques du substrat, et une couche de protection transparente (18) au-dessus de cette superposition, la superposition comprenant une couche d'antimoniure d'indium ou de gallium (14) insérée entre deux couches diélectriques (12, 16) d'un composé de sulfure de zinc et d'oxyde de silicium (ZnS-SiO₂), le procédé comprenant une opération de dégradation consistant à faire défiler sur les marques physiques un faisceau laser ayant une puissance inférieure d'environ 30% à la puissance d'un laser de lecture servant à lire les informations inscrites en super-résolution sur le disque.

2. Procédé selon la revendication 1, **caractérisé en ce que** le laser de lecture est un laser bleu à longueur d'onde d'environ 400 nanomètres, de puissance environ 1,5 à 2 milliwatts, et le laser de dégradation est aussi un laser bleu.

3. Procédé selon la revendication 2, **caractérisé en ce que** le laser de dégradation est le laser de lecture fonctionnant avec un courant et/ou une tension d'alimentation pius faibles.

4. Procédé selon l'une des revendications 1 à 3, **caractérisé en ce que** les proportions atomiques d'antimoine dans la couche d'antimoniure (14) sont de 45% à 55%, la proportion d'indium ou de gallium étant comprise entre 45% et le complément à 100% de la proportion d'antimoine.

5. Procédé selon l'une des revendications 1 à 4, **caractérisé en ce que** l'épaisseur de la couche d'antimoniure InSb ou GaSb est de 10 à 50 nanomètres.

6. Procédé selon l'une des revendications 1 à 5, **caractérisé en ce que** l'épaisseur de la couche d'antimoniure InSb ou GaSb est de 20 à 30 nanomètres.

7. Procédé selon l'une des revendications 1 à 6, **caractérisé en ce que** les couches diélectriques de ZnS-SiO₂ ont chacune une épaisseur comprise entre 20 et 100 nanomètres.

8. Procédé selon l'une des revendications 1 à 7, **caractérisé en ce que** la proportion atomique de ZnS et de SiO₂ est choisie dans la gamme entre ZnS_{85at%}-SiO_{2 15art%} (proportion 80/20) et ZnS_{70at%}-SiO_{2 30at%} (proportion 70/30).

## Claims

1. A process for intentional degradation of information recorded in super-resolution in a structure for optical storage of high-resolution information, the structure comprising a substrate (10) equipped with physical marks whose geometrical configuration defines the information recorded, a superposition of three layers (12, 14, 16) on top of the substrate marks, and a transparent protective layer (18) on top of this superposition, the superposition comprising a layer of indium or gallium antimonide (14) inserted between two dielectric layers (12, 16) of a zinc sulfide and silicon oxide (ZnS/SiO₂) compound, the process comprising a degradation operation consisting in making a laser beam, which has a power around 30% lower than the power of the read laser used to read the information recorded in super-resolution on the disk, pass over the physical marks.

2. The process as claimed in claim 1, wherein the read laser is a blue laser with a wavelength of around 400 nanometers, with a power of around 1.5 to 2 milliwatts, and the degradation laser is also a blue laser.

3. The process as claimed in claim 2, wherein the degradation laser is the read laser operating with a lower supply current and/or voltage.

4. The process as claimed in one of claims 1 to 3, wherein the atomic proportions of antimony in the antimonide layer (14) are from 45% to 55%, the proportion of indium or of gallium being between 45% and the balance of the antimony proportion from 100%.

5. The process as claimed in one of claims 1 to 4, wherein the thickness of the InSb or GaSb antimonide layer is from 10 to 50 nanometers.

6. The process as claimed in one of claims 1 to 5, wherein the thickness of the InSb or GaSb antimonide layer is from 20 to 30 nanometers.

7. The process as claimed in one of claims 1 to 6, wherein the ZnS/SiO₂ dielectric layers each have a thickness between 20 and 100 nanometers.

8. The process as claimed in one of claims 1 to 7, wherein the atomic proportion of ZnS and of SiO₂ is taken from the range between ZnS_{85 at%}SiO_{2 15at%}

## Patentansprüche

1. Verfahren zum absichtlichen Verschlechtern von Informationen, die in Super-Resolution in einer optischen Informationsspeicherstruktur mit hoher Auflösung geschrieben sind, wobei die Struktur Folgendes umfasst: ein Substrat (10) mit physischen Markierungen, deren geometrische Konfiguration die aufgezeichneten Informationen definiert, eine Überlagerung von drei Schichten (12, 14, 16) über den Markierungen des Substrats und eine transparente Schutzschicht (18) über dieser Überlagerung, wobei die Überlagerung eine Indium- oder Galliumantimonidschicht (14) umfasst, die zwischen zwei dielektrische Schichten (12, 16) einer Verbindung aus Zink-Schwefel und Siliciumoxid (ZnS-SiO₂) eingefügt ist, wobei das Verfahren einen Verschlechterungsvorgang umfasst, der darin besteht, einen Laserstrahl mit einer Leistung von weniger als etwa 30 % der Leistung eines Leselasers an den physikalischen Markierungen vorbei zu führen, der dazu dient, die in Super-Resolution auf die Platte geschriebenen Informationen zu lesen.

2. Verfahren nach Anspruch 1, **dadurch gekennzeichnet, dass** der Leselaser ein Blaulaser mit einer Wellenlänge von etwa 400 Nanometern und einer Leistung von etwa 1,5 bis 2 Milliwatt ist und der Verschlechterungslaser ebenfalls ein Blaulaser ist.

3. Verfahren nach Anspruch 2, **dadurch gekennzeichnet, dass** der Verschlechterungslaser und der Leselaser mit einem/r niedrigeren Versorgungsstrom- und/oder -spannung arbeitet.

4. Verfahren nach einem der Ansprüche 1 bis 3, **dadurch gekennzeichnet, dass** die Antimonatomanteile in der Antimonidschicht (14) 45 % bis 55 % betragen, wobei der Indium- oder Galliumanteil zwischen 45 % und dem Rest bis 100 % des Antimonanteils beträgt.

5. Verfahren nach einem der Ansprüche 1 bis 4, **dadurch gekennzeichnet, dass** die Dicke der Antimonidschicht InSb oder GaSb 10 bis 50 Nanometer beträgt.

6. Verfahren nach einem der Ansprüche 1 bis 5, **dadurch gekennzeichnet, dass** die Dicke der Antimonidschicht InSb oder GaSb 20 bis 30 Nanometer beträgt.

7. Verfahren nach einem der Ansprüche 1 bis 6, **dadurch gekennzeichnet, dass** die dielektrischen ZnS-SiO₂-Schichte jeweils eines Dicke zwischen 20 und 100 Nanometern haben.

8. Verfahren nach einem der Ansprüche 1 bis 7, **dadurch gekennzeichnet, dass** der Atomanteil von ZnS und von SiO₂ im Bereich zwischen ZnS_{85at%}-SiO_{2 15at%} (Verhältnis 80:20) und ZnS_{70at%}-SiO_{2 30at%} (Verhältnis 70:30) ausgewählt wird.
